# EUROPEAN PATENT APPLICATION

(11) **EP 1 843 562 A1**
(43) Date of publication of application: **10.10.2007**
(21) Application number: 06023644.5
(22) Date of filing: 14.11.2006
(51) Int. Cl.: H04M 1/725, G04G 13/02

(54) **Mobile communication terminal capable of digital broadcast data reception and alarm method using the same**

(30) Priority: 14.03.2006 KR 20060023317
(71) Applicant: Samsung Electronics Co., Ltd., Suwon-si, Gyeonggi-Do (KR)
(72) Inventor: You, Jeong Min, Gyeonggi-do (KR); Lee, Sang Won, Gyeonggi-do (KR)
(74) Representative: Boakes, Jason Carrington

(57) **Abstract**

A mobile communication terminal capable of digital broadcast data reception is disclosed. The mobile communication terminal includes a key input unit for inputting alarm setting information to set a digital broadcast data according to user selections, an alarm information memory for storing the alarm setting information, a controller for measuring the strength of an electric field for reception of desired digital broadcast data at a predetermined time prior to an alarm time of the alarm setting information, and for setting, if the electric field is below a threshold level, an operation mode to a default alarm mode at the alarm time, and receiving, if the electric field is not below the threshold level, the digital broadcast data and setting the operation mode to a broadcast alarm mode at the alarm time, and an alarm output unit for outputting an alarm corresponding to the set alarm mode.

## Description

### BACKGROUND OF THE INVENTION

### 1. Field of the Invention

The present invention relates generally to a mobile communication terminal capable of receiving digital broadcast data and, more particularly, to a mobile communication terminal that can use received digital broadcast data as an alarm, and to an alarm method using the mobile communication terminal.

### 2. Description of the Related Art

The use of wakeup calls to rise at a preset time is widespread. Recently, mobile communication terminals have been popularized, and can be used to set wakeup calls. When a mobile communication terminal is used to set a wakeup call, it always reproduces the same melody and thus functions no more than a conventional alarm clock.

Korean Patent No. 1998-0065846, entitled "Television set and on-time driving method thereof", discloses a method of producing an alarm using a television. In this method, data from the television, instead of a simple bell or alarm sound, is output to wake up the user and to provide information to the user at the same time. In addition, if the time set by the user belongs to a time period at which no television program is available, the method requires the television to produce a predetermined bell sound, thereby enabling the television to act as an alarm regardless of the television broadcast schedules. However, a television set is not portable and can be used as an alarm only in a fixed location.

With advances in technology, digital multimedia broadcasting (DMB) phones have become commercially available. However, the reception of digital broadcast data under a weak electric field is not good, thereby leading to reproduction failure. When a DMB phone is being used as an alarm, if reception of digital broadcast data fails due to a weak electric field, the user cannot hear the alarm and cannot rise at the time set in advance. Consequently, instability of digital broadcast data reception due to a weak electric field may limit the application of digital broadcasting to alarm facilities.

### SUMMARY OF THE INVENTION

The present invention has been made in view of the above problems, and an object of the present invention is to provide an alarm method for a mobile communication terminal capable of receiving digital broadcast data.

In accordance with the present invention, there is provided a mobile communication terminal capable of digital broadcast data reception, that includes a key input unit for inputting alarm setting information to set an alarm of digital broadcast data according to user selections; an alarm information memory for storing the alarm setting information; a controller for measuring the strength of an electric field for reception of desired digital broadcast data at a predetermined time prior to an alarm time of the alarm setting information, and for setting, if the electric field is below a threshold, an operation mode to a default alarm mode at the alarm time, and receiving, if the electric field is not below the threshold, the digital broadcast data and setting the operation mode to a broadcast alarm mode at the alarm time; and an alarm output unit for outputting an alarm corresponding to the set alarm mode.

In accordance with the present invention, there is also provided a mobile communication terminal capable of digital broadcast data reception, that includes a key input unit for inputting alarm setting information to set an alarm of digital broadcast data according to user selections; an alarm information memory for storing the alarm setting information; a controller for receiving desired digital broadcast data at a predetermined time prior to an alarm time of the alarm setting information and setting an operation mode to a default alarm mode at the alarm time, and for switching, if an alarm switch signal is input by the user in the default alarm mode, the operation mode from the default alarm mode to a broadcast alarm mode; and an alarm output unit for outputting an alarm corresponding to the set alarm mode.

In accordance with the present invention, there is still further provided an alarm method for a mobile communication terminal capable of digital broadcast data reception, that includes inputting alarm setting information to set an alarm of digital broadcast data according to user selections; storing the alarm setting information; measuring the strength of an electric field for reception of desired digital broadcast data at a predetermined time prior to an alarm time of the alarm setting information; setting, if the electric field is below a threshold, an operation mode to a default alarm mode at the alarm time, and receiving, if the electric field is not below the threshold, the digital broadcast data and setting the operation mode to a broadcast alarm mode at the alarm time; and outputting an alarm corresponding to the set alarm mode.

In accordance with the present invention, there is yet further provided an alarm method for a mobile communication terminal capable of digital broadcast data reception, that includes inputting alarm setting information to set an alarm of digital broadcast data according to user selections; storing the alarm setting information; receiving desired digital broadcast data at a predetermined time prior to an alarm time of the alarm setting information, and setting an operation mode to a default alarm mode at the alarm time; outputting a default alarm according to the default alarm mode; determining whether an alarm switch signal is input by the user in the default alarm mode; switching, if an alarm switch signal is input by the user, the operation mode from the default alarm mode to a broadcast alarm mode; and outputting an alarm of digital broadcast data according to the broadcast alarm mode.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing the configuration of a mobile communication terminal according to an embodiment of the present invention;
FIGS. 2A and 2B are data structures for maintaining alarm setting information used in the mobile communication terminal of FIG. 1;
FIG. 3 is a flow chart illustrating a method of producing an alarm of digital broadcast data according to another embodiment of the present invention;
FIG. 4 is a flow chart illustrating a step of FIG. 3 to output the alarm of digital broadcast data;
FIG. 5 is a flow chart illustrating a step of FIG. 4 to output the alarm of digital broadcast data at a given volume level; and
FIG. 6 is a flow chart illustrating a method of producing an alarm of digital broadcast data according to a third embodiment of the present invention.

### DETAILED DESCRIPTION OF PREFERRED EMBODIMENTS OF THE INVENTION

Hereinafter, preferred embodiments of the present invention are described in detail with reference to the accompanying drawings. The same reference symbols identify the same or corresponding elements in the drawings. Some constructions or processes known in the art are not described to avoid obscuring the invention in unnecessary detail.

Although the description below is centered on digital multimedia broadcasting (DMB), the present invention may also be applied to other types of digital broadcasting such as, for example, digital video broadcasting - handheld (DVB-H) and MediaFLO.

By setting a desired digital broadcast channel to an alarm, the alarm method of the present invention enables the user to rise at a preset time and to obtain various information, such as news, weather forecasts, and daily horoscopes, instead of hearing a uniform alarm. In addition, when reception of digital broadcast data of a desired channel is not good owing to a weak electric field, a default alarm is output. As a result, the alarm method can be utilized even under weak electric fields.

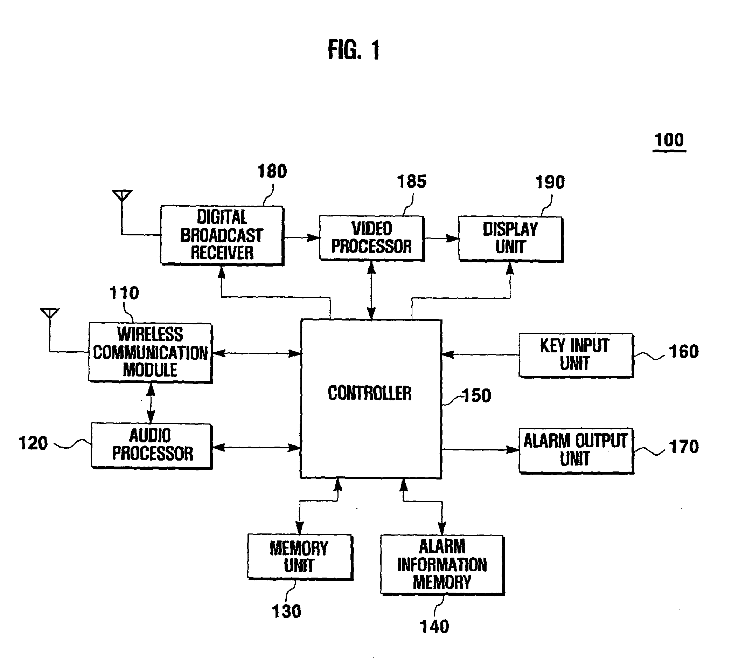

FIG. 1 is a block diagram showing the configuration of a mobile communication terminal according to the present invention.

As shown in FIG. 1, the mobile communication terminal 100 comprises a wireless communication module 110, an audio processor 120, a memory unit 130, an alarm information memory 140, a controller 150, a key input unit 160, an alarm output unit 170, a digital broadcast receiver 180, a video processor 185, and a display unit 190.

The wireless communication module 110 performs data transmission and reception operations for the mobile communication terminal 100. The wireless communication module 110 includes a radio frequency (RF) transmitter for upconverting the frequency of a signal to be transmitted and amplifying the signal, and an RF receiver for low-noise amplifying a received signal and downconverting the frequency of the signal. The wireless communication module 110 establishes channels for voice and data communication with external communication devices, and transmits/receives short messages to/from external communication devices.

The wireless communication module 110 also includes a transmitting module for encoding and modulating a signal to be transmitted through a wireless channel, and a receiving module for demodulating and decoding a signal received through a wireless channel.

The audio processor 120 may include a coder/decoder (codec). The codec includes a data codec for processing packet data, and an audio codec for processing an audio signal such as a voice signal. The audio processor 120 converts a digital audio signal from the wireless communication module 110 into an analog signal through the audio codec to reproduce the analog signal through a speaker. The audio processor 120 also converts an analog audio signal from a microphone into a digital audio signal through the audio codec to output the digital audio signal to the wireless communication module 110.

The memory unit 130 stores programs for controlling general operations of the mobile communication terminal 100, and also stores data resulting from execution of the programs.

The alarm information memory 140 stores alarm setting information to set an alarm of the digital broadcast data. For example, the alarm setting information stored in the alarm information memory 140 may include an alarm time, alarm day, repetition interval, repetition number, default alarm, digital broadcast channel, automatic alarm termination time, digital broadcast data reception start time, initial volume level, volume increment, and volume increment interval.

The controller 150 controls the overall operation of the mobile communication terminal 100. The controller 150 also controls data transmission and reception. The controller 150 switches the operation mode of the mobile communication terminal 100 to an alarmmode, when necessary.

The controller 150 determines whether a related electric field is weak, i.e. below a threshold level, for reception of desired digital broadcast data at a predetermined time prior to the alarm time of the alarm setting information stored in the alarm information memory 140. If the electric field is weak, i.e. not below the threshold level, the controller 150 switches the operation mode to a default alarm mode at the alarm time. If the electric field is not weak, the controller 150 receives the digital broadcast data and switches at the alarm time the operation mode to a broadcast alarm mode. The predetermined time is preset to one minute and may be changed by the user. In the default alarm mode, the controller 150 preferably tests the strength of the electric field in real time, and outputs digital broadcast data as an alarm if the electric field is not weak.

The controller 150 outputs an audio signal contained in the received digital broadcast data at an initial volume level, and changes the volume level by adding a volume increment to the current volume level at each volume increment interval.

In addition, the controller 150 preferably terminates the alarm of the digital broadcast data after a preset automatic termination time from the start of the alarm. The automatic termination time may be, for example, set to 5, 10, 15, 30, 60, or infinite minutes.

The controller 150 can receive desired digital broadcast data at a predetermined time prior to the alarm time of the alarm setting information stored in the alarm information memory 140, and set the operation mode to a default alarm mode at the alarm time to output a default alarm. When an alarm switch signal from the user is recognized in the default alarm mode, the controller 150 switches the operation mode from the default alarm mode to a broadcast alarm mode. At the predetermined time prior to the alarm time, if the electric field associated with the received digital broadcast data is determined to be below the threshold, the controller 150 preferably maintains the default alarmmode even if an alarm switch signal (for example, a touch operation or voice signal of the user) is input.

In the broadcast alarm mode, a "snooze" function is preferably performed on the basis of the alarm setting information. That is, when a number of repetitions is specified, the alarm of digital broadcast data may be stopped by an external input and then resumed at a next repetition interval. The controller 150 preferably terminates the alarm upon input of an alarm termination signal.

The key input unit 160 inputs user commands and, in particular, alarm setting information according to user selections.

The alarm output unit 170 outputs an alarm according to the alarm mode. For example, the alarm output unit 170 outputs a default alarm in the default alarmmode, and outputs an alarm of digital broadcast data in the broadcast alarm mode.

In the broadcast alarm mode, the alarm output unit 170 preferably outputs an audio signal contained in the received digital broadcast data at an initial volume level, and then outputs the audio signal at volume levels reset by adding a volume increment to the current volume level at each volume increment interval.

The digital broadcast receiver 180 receives digital broadcast data, and extracts audio and video signals from the received digital broadcast data. The extracted audio signal is output to the audio processor 120 via the controller 150, and the extracted video signal is decoded according to a standard, for example a Moving Picture Experts Group (MPEG) standard, and output to the video processor 185.

In the broadcast alarm mode of the present invention, the video processor 185 outputs a video signal from the digital broadcast receiver 180 to an area of the display unit 190, and processes user data from the controller 150 to output the processed user data to another area of the display unit 190.

The display unit 190 displays operation states of the mobile communication terminal 100. In the broadcast alarm mode, the display unit 190 preferably displays a video signal contained in digital broadcast data under the control of the controller 150.

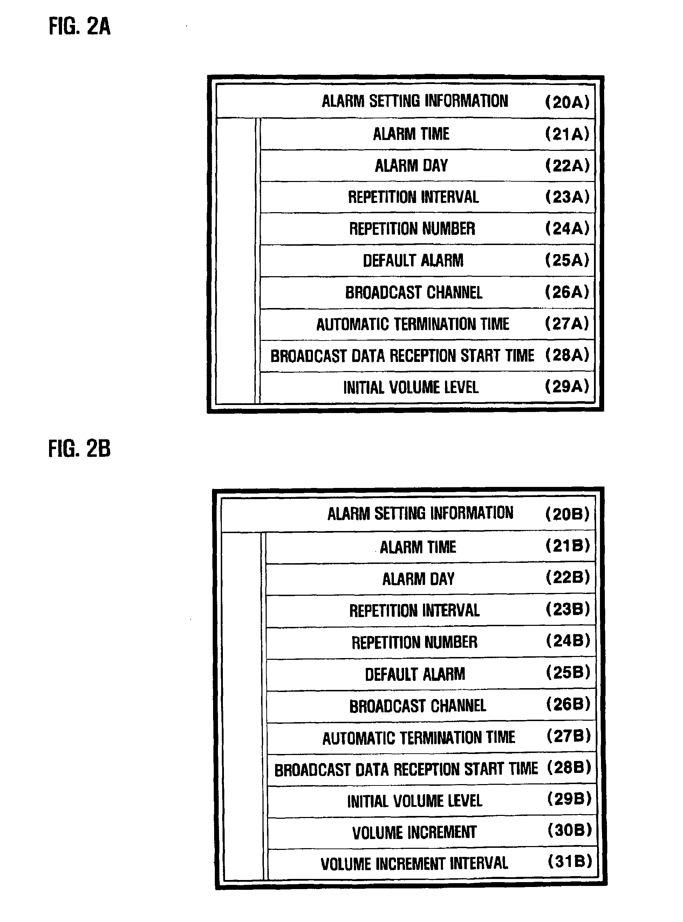

FIGS. 2A and 2B are data structures for maintaining alarm setting information used in the mobile communication terminal 100 of FIG. 1.

Referring to FIGS. 1 and 2A, a first alarm setting information 20A stored in the alarm information memory 140 may include fields for specifying an alarm time 21A, alarm day 22A, repetition interval 23A, repetition number 24A, default alarm 25A, broadcast channel 26A, automatic termination time 27A, broadcast data reception start time 28A, and initial volume level 29A.

For example, the alarm time 21A is set to '6:00 A.M.', the alarm day 22A 'every day', the repetition interval 23A '3 minutes' , the repetition number 24A '5', the default alarm 25A 'song ABCD', the broadcast channel 26A 'ch #1', the automatic termination time 27A '5 minutes' , the broadcast data reception start time 28A '3 minutes prior to alarm' , and the initial volume level 29A '3'. With these settings, the alarm sounds from 6: 00 A.M. every 3 minutes (by a "snooze" function) every day. The alarm repeats five times if no termination signal is input. The mobile communication terminal 100 starts to receive digital broadcast data of the channel #1 at 3 minutes prior to 6: 00 A.M., and outputs the received broadcast data as an alarm from 6:00 A.M. at a volume level of 3. If the digital broadcast data of the channel #1 cannot be received due to a weak electric field, the song 'ABCD' set as the default alarm is reproduced at 6:00 A.M.

Referring to FIGS. 1 and 2B, a second alarm setting information 20B stored in the alarm information memory 140 may include fields for specifying an alarm time 21B, alarm day 22B, repetition interval 23B, repetition number 24B, default alarm 25B, broadcast channel 26B, automatic termination time 27B, broadcast data reception start time 28B, initial volume level 29B, volume increment 30B, and volume increment interval 31B.

For example, the alarm time 21B is set to '6:00 A.M.', the alarm day 22B 'every day', the repetition interval 23B '3 minutes' , the repetition number 24B '5' , the default alarm 25B 'song ABCD', the broadcast channel 26B 'ch #1', the automatic termination time 27B '5 minutes', the broadcast data reception start time 28B '3 minutes prior to alarm' , the initial volume level 29B '3', the volume increment 30B '1' , and the volume increment interval 31B '2 seconds'. With these settings, the alarm sounds from 6:00 A.M. every 3 minutes (by a "snooze" function) every day. The alarm repeats five times if no termination signal is input. The mobile communication terminal 100 starts to receive digital broadcast data of the channel #1 at 3 minutes prior to 6:00 A.M., and outputs the received broadcast data as an alarm from 6:00 A.M. at a volume level of 3. If the digital broadcast data of the channel #1 cannot be received due to a weak electric field, the song 'ABCD' set as the default alarm is reproduced at 6:00 A.M. The volume level of the alarm is incremented by 1 at every 2 seconds if no user input occurs.

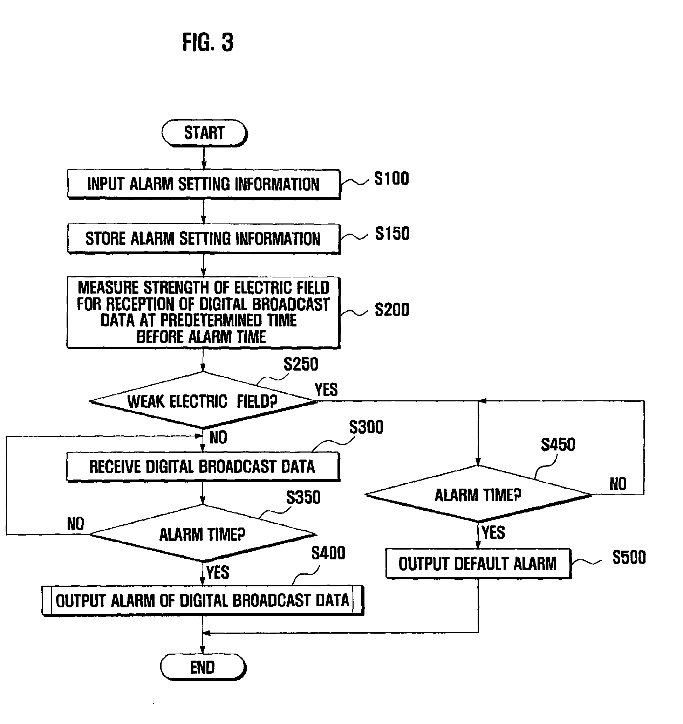

FIG. 3 is a flow chart illustrating amethodof producing an alarm of digital broadcast data according to another embodiment of the present invention.

Referring to FIGS. 1 and 3, the controller 150 inputs alarm setting information according to user selections (S100), then stores the alarm setting information in the alarm information memory 140 (S150). The alarm setting information preferably includes an alarm time, repetition interval, number of repetitions, desired broadcast channel, automatic termination time, broadcast data reception start time, initial volume level, volume increment, and volume increment interval.

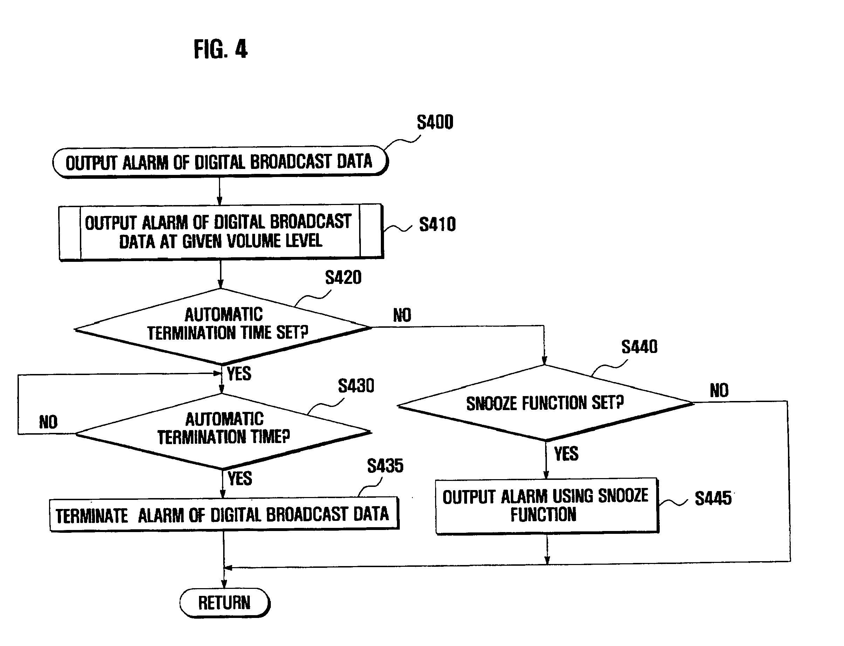

The controller 150 measures the strength of an electric field for reception of the desired digital broadcast data at a predetermined time prior to the alarm time of the alarm setting information (S200). The controller 150 then determines whether the electric field is below the threshold (5250) . If the electric field of the digital broadcast data is not below the threshold, the controller 150 receives the digital broadcast data (S300). After start of digital broadcast data reception, the controller 150 determines whether the current time of the mobile communication terminal 100 is equal to the set alarm time (S350) . If the current time is equal to the alarm time, the controller 150 sets the operation mode to a broadcast alarm mode, and controls the alarm output unit 170 to output an alarm of digital broadcast data (5400). Step S400 is described in detail later in relation to FIG. 4.

If the current time is not equal to the alarm time, step S300 is repeated.

If the electric field of the digital broadcast data is below the threshold at step S250, the controller 150 determines whether the current time of the mobile communication terminal 100 is equal to the set alarm time (5450). If the current time is equal to the alarm time, the controller 150 sets the operation mode to a default alarm mode, and controls the alarm output unit 170 to output a default alarm (S500).

FIG. 4 is a flow chart illustrating the step S400 of FIG. 3 to output the alarm of digital broadcast data.

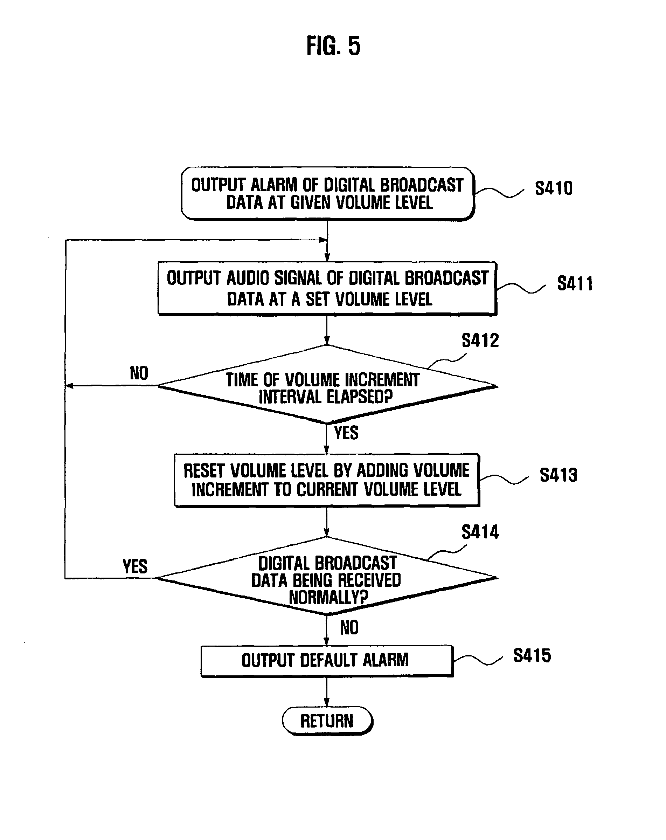

Referring to FIGS. 1 and 4, the controller 150 outputs the alarm of digital broadcast data at a given volume level (S410). Step S410 is described in detail later in relation to FIG. 5.

The controller 150 determines whether the automatic termination time of the alarmis set (S420). If the automatic termination time of the alarm is set, the controller 150 determines whether the current time of the mobile communication terminal 100 is equal to the set automatic termination time (5430) . If the current time is not equal to the set automatic termination time, step S430 is repeated.

If the current time is equal to the set automatic termination time, the controller 150 terminates the alarm of digital broadcast data (S435).

If the automatic termination time of the alarm is not set at step S420, the controller 150 determines whether a snooze function is set (S440). If a snooze function is set, the controller 150 outputs the alarm of digital broadcast data using the snooze function (S445). Specifically, the controller 150 outputs the alarm of digital broadcast data according to the repetition interval and repetition number set in the alarm setting information.

If the snooze function is not set at step S440, the controller 150 continues to output the alarm of digital broadcast data until input of a termination signal.

FIG. 5 is a flow chart illustrating the step S410 of FIG. 4 to output the alarm of digital broadcast data at a given volume level.

Referring to FIGS. 1 and 5, the controller 150 outputs an audio signal contained in the digital broadcast data at the set volume level (S411). The controller 150 determines whether the time elapsed from the previous volume level setting is equal to the set volume increment interval (S412). If the elapsed time is equal to the volume increment interval, the controller 150 changes the volume level by adding the volume increment to the current volume level (S413).

If the elapsed time is less than the volume increment interval, step S411 is repeated.

After resetting the volume level at step S413, the controller 150 determines whether the digital broadcast data is being received normally (S414). If the digital broadcast data is being received normally, step S411 is repeated.

If the digital broadcast data is not being received normally, the controller 150 sets the operation mode to a default alarm mode, and controls the alarm output unit 170 to output a default alarm (S415).

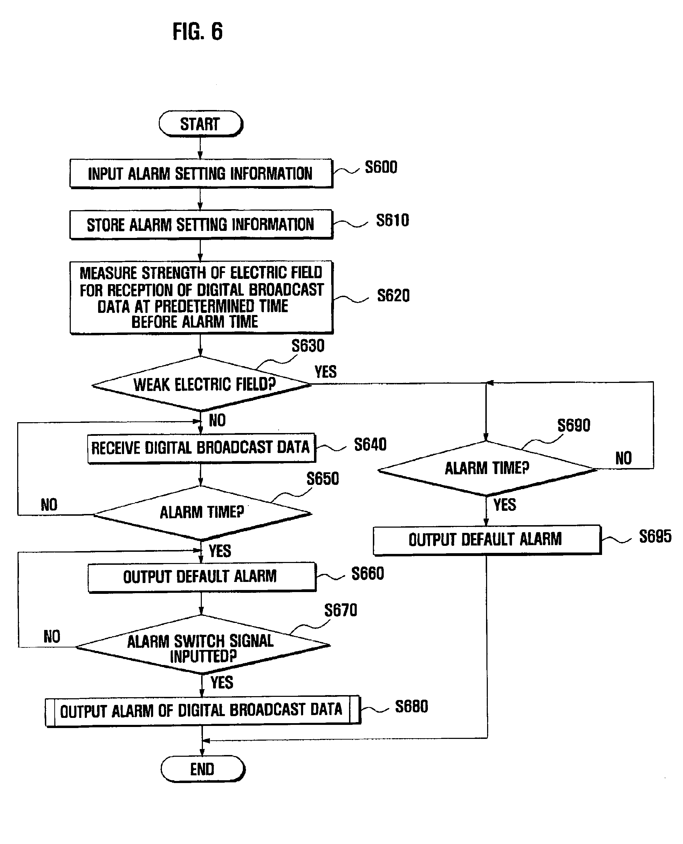

FIG. 6 is a flow chart illustrating a method of producing an alarm of digital broadcast data according to a third embodiment of the present invention.

Referring to FIGS. 1 and 6, the controller 150 inputs alarm setting information according to user selections (S600), and then stores the alarm setting information in the alarm information memory 140 (S610). The controller 150 measures the strength of an electric field for reception of desired digital broadcast data at a predetermined time prior to the alarm time of the alarm setting information (S620). The controller 150 then determines whether the electric field is below the threshold (S630). If the electric field of the digital broadcast data is not below the threshold, the controller 150 receives the digital broadcast data (S640).

After start of digital broadcast data reception, the controller 150 determines whether the current time of the mobile communication terminal 100 is equal to the set alarm time (S650). If the current time is equal to the alarm time, the controller 150 sets the operation mode to a default alarm mode, and controls the alarm output unit 170 to output a default alarm (S660).

During the default alarm output, the controller 150 determines whether an alarm switch signal is input by the user (S670). If an alarm switch signal is input, the controller 150 switches the operation mode from the default alarm mode to a broadcast alarm mode, and controls the alarm output unit 170 to output an alarm of digital broadcast data (5680) . If the alarm switch signal is not input, step S660 is repeated. The step S680 of outputting an alarm of digital broadcast data is described previously in relation to FIG. 4, and therefore a repeated description thereof is omitted.

If the electric field of the digital broadcast data is below the threshold at step S630, the controller 150 determines whether the current time of the mobile communication terminal 100 is equal to the set alarm time (S690). If the current time is equal to the alarm time, the controller 150 sets the operation mode to the default alarm mode, and controls the alarm output unit 170 to output the default alarm (S695). Under the weak electric field, the controller 150 preferably maintains the default alarm mode to output the default alarm even if an alarm switch signal is input by the user.

In addition, during output of the default alarm due to the weak electric field, the controller 150 may repeatedly test the strength of the electric field for reception of digital broadcast data, and control the alarm output unit 170 to output an alarm of digital broadcast data if the electric field is not weak.

As apparent from the above description, the present invention provides an alarmmethod for a mobile communication terminal capable of receiving digital broadcast data. By setting a desired digital broadcast channel to an alarm, the alarm method enables the user to rise at a preset time and to obtain information, such as news, weather forecasts, and daily horoscopes, instead of hearing a conventional alarm. The volume of the alarm of digital broadcast data can be gradually increased in order not to surprise the user. When the reception of digital broadcast data of a desired channel is not good due to a weak electric field, a default alarm is output. As a result, the alarm method can be utilized even under weak electric fields.

While preferred embodiments of the present invention have been shown and described in this specification, it will be understood by those skilled in the art that various changes or modifications of the embodiments are possible without departing from the spirit and scope of the invention as defined by the appended claims. For example, although the description is centered on digital multimedia broadcasting (DMB), the present invention may also be applied to other types of digital broadcasting such as, for example, digital video broadcasting - handheld (DVB-H) and MediaFLO.

## Claims

1. A mobile communication terminal capable of digital broadcast data reception, comprising:
a key input unit for inputting alarm setting information to set a digital broadcast data alarm according to user selections;
an alarm information memory for storing the alarm setting information;
a controller for measuring the strength of an electric field for reception of desired digital broadcast data at a predetermined time prior to an alarm time of the alarm setting information, and for setting, if the electric field is below a threshold level, an operation mode to a default alarm mode at the alarm time, and receiving, if the electric field is not below a threshold level, the digital broadcast data and setting the operation mode to a broadcast alarm mode at the alarm time; and
an alarm output unit for outputting an alarm corresponding to the set alarm mode.

2. The mobile communication terminal of claim 1, wherein the alarm setting information includes at least one of an alarm time, digital broadcast channel, automatic alarm termination time, broadcast data reception start time, initial volume level, volume increment, and volume increment interval.

3. The mobile communication terminal of claim 2, wherein the alarm output unit outputs, in the broadcast alarm mode, an audio signal contained in the received digital broadcast data at the initial volume level, and then outputs the audio signal at volume levels changed by adding the volume increment to the current volume level at each volume increment interval.

4. The mobile communication terminal of claim 2, wherein the controller automatically terminates the alarm of digital broadcast data in the broadcast alarm mode at the automatic alarm termination time.

5. A mobile communication terminal capable of digital broadcast data reception, comprising:
a key input unit for inputting alarm setting information to set a digital broadcast data alarm according to user selections;
an alarm information memory for storing the alarm setting information;
a controller for receiving desired digital broadcast data at a predetermined time prior to an alarm time of the alarm setting information and setting an operation mode to a default alarm mode at the alarm time, and for switching, if an alarm switch signal is input by a user in the default alarm mode, the operation mode from the default alarm mode to a broadcast alarm mode; and
an alarm output unit for outputting an alarm corresponding to the set alarm mode.

6. The mobile communication terminal of claim 5, wherein the alarm setting information includes at least one of an alarm time, default alarm, digital broadcast channel, automatic alarm termination time, broadcast data reception start time, initial volume level, volume increment, and volume increment interval.

7. The mobile communication terminal of claim 6, wherein the controller measures the strength of an electric field for reception of the digital broadcast data at a predetermined time prior to the alarm time, and maintains, if the electric field is below a threshold level, the default alarm mode even if an alarm switch signal is input by the user.

8. The mobile communication terminal of claim 6, wherein the alarm output unit outputs, in the broadcast alarm mode, an audio signal contained in the received digital broadcast data at the initial volume level, and then outputs the audio signal at volume levels changed by adding the volume increment to the current volume level at each volume increment interval.

9. The mobile communication terminal of claim 6, wherein the controller automatically terminates the alarm of digital broadcast data in the broadcast alarm mode at the automatic alarm termination time.

10. An alarm method for a mobile communication terminal capable of digital broadcast data reception, comprising the steps of:
a) inputting alarm setting information to set digital broadcast data alarm according to user selections;
b) storing the alarm setting information;
c) measuring the strength of an electric field for reception of desired digital broadcast data at a predetermined time prior to an alarm time of the alarm setting information;
d) setting, if the electric field is below a threshold level, an operation mode to a default alarm mode at the alarm time, and receiving, if the electric field is not below the threshold level, the digital broadcast data and setting the operation mode to a broadcast alarm mode at the alarm time; and
e) outputting an alarm corresponding to the set alarm mode.

11. The alarm method of claim 10, wherein the alarm setting information includes at least one of an alarm time, digital broadcast channel, automatic alarm termination time, broadcast data reception start time, initial volume level, volume increment, and volume increment interval.

12. The alarm method of claim 11, wherein step e) includes:
outputting, in the broadcast alarm mode, an audio signal contained in the received digital broadcast data at the initial volume level;
adding the volume increment to the current volume level at each volume increment interval to change the volume level; and
outputting the audio signal at the changed volume level.

13. The alarm method of claim 11, wherein at step e) the digital broadcast data alarm in the broadcast alarm mode is automatically terminated on the basis of the automatic alarm termination time.

14. An alarm method for a mobile communication terminal capable of digital broadcast data reception, comprising the steps of:
a) inputting alarm setting information to set a digital broadcast data alarm according to user selections;
b) storing the alarm setting information;
c) receiving desired digital broadcast data at a predetermined time prior to an alarm time of the alarm setting information, and setting an operation mode to a default alarm mode at the alarm time;
d) outputting a default alarm according to the default alarm mode;
e) determining whether an alarm switch signal is input by a user in the default alarm mode;
f) switching, if an alarm switch signal is input by the user, the operation mode from the default alarm mode to a broadcast alarm mode; and
g) outputting an alarm of digital broadcast data according to the broadcast alarm mode.

15. The alarm method of claim 14, wherein the alarm setting information includes at least one of an alarm time, default alarm, digital broadcast channel, automatic alarm termination time, broadcast data reception start time, initial volume level, volume increment, and volume increment interval.

16. The alarm method of claim 15, wherein at step c) the strength of an electric field for reception of the digital broadcast data is measured at a predetermined time prior to the alarm time, and if the electric field is below a threshold level, the default alarm mode is maintained even if an alarm switch signal is input by the user.

17. The alarm method of claim 15, wherein step g) includes:
outputting, in the broadcast alarm mode, an audio signal contained in the received digital broadcast data at the initial volume level;
adding the volume increment to the current volume level at each volume increment interval to change the volume level; and
outputting the audio signal at the changed volume level.

18. The alarm method of claim 15, wherein at step g) the digital broadcast data alarm in the broadcast alarm mode is automatically terminated at the automatic alarm termination time.
